# EUROPÄISCHE PATENTANMELDUNG

(11) **EP 4 468 179 A1**
(43) Veröffentlichungstag der Anmeldung: **27.11.2024**
(21) Anmeldenummer: 24176972.8
(22) Anmeldetag: 21.05.2024
(51) Int. Cl.: G06F 18/2433, B65B 57/00, G05B 19/418, G06T 7/00

(54) **OPTIMIERUNG DER GUT- BZW. SCHLECHTPRODUKTERKENNUNG FÜR VERPACKUNGSMASCHINEN**

(30) Priorität: 25.05.2023 DE 102023113725
(71) Anmelder: MULTIVAC Sepp Haggenmüller SE & Co. KG, 87787 Wolfertschwenden (DE)
(72) Erfinder: Haschka, Marco, 87758 Kronburg (DE)
(74) Vertreter: Grünecker Patent- und Rechtsanwälte PartG mbB

(57) **Zusammenfassung**

Eine Verpackungsmaschine (100) umfasst einen optischen Sensor (140) und eine Recheneinheit (110). Der optische Sensor (140) ist eingerichtet, um Bilddaten (410) von Arbeitsprodukten (125, 135) der Verpackungsmaschine (100) zu erzeugen. Die Recheneinheit (110) ist eingerichtet zum Klassifizieren eines Arbeitsproduktes (125, 135) der Verpackungsmaschine (100) als Gutprodukt oder Schlechtprodukt. Zur Klassifizierung des Arbeitsproduktes (125, 135) wird eine Vielzahl von Werten für jedes Bildmerkmal (420) eines oder mehrerer vorbestimmter Bildmerkmale in einem Initialisierungsbetrieb der Verpackungsmaschine (125, 135) bestimmt. Das Bestimmen der Vielzahl von Werten umfasst das Empfangen von Bilddaten (410) eines jeden Arbeitsproduktes (125, 135) aus einem Initialisierungssatz von Arbeitsprodukten von dem optischen Sensor (140), das Extrahieren der vorbestimmten Bildmerkmale (420) für jedes Arbeitsprodukt (125, 135) des Initialisierungssatzes aus den empfangenen Bilddaten (410) des jeweiligen Arbeitsproduktes (125, 135), und das Bestimmen eines Wertes für jedes extrahierte Bildmerkmal (420) für jedes Arbeitsprodukt (125, 135). Zur Klassifizierung des Arbeitsproduktes (125, 135) wird eine entsprechende Häufigkeitsverteilung (430) der jeweiligen Vielzahl von Werten für jedes vorbestimmte Bildmerkmal (420) über alle Arbeitsprodukte (125, 135) des Initialisierungssatzes bestimmt. Zudem werden Bilddaten (410) des zu klassifizierenden Arbeitsproduktes (125, 135) empfangen. Jedes Bildmerkmal (420) wird aus den empfangenen Bilddaten (410) extrahiert, und ein Wert wird für jedes der extrahierten Bildmerkmale (420) bestimmt. Eine Wahrscheinlichkeit dafür, dass das zu klassifizierende Arbeitsprodukt (125, 135) ein Gutprodukt ist wird bestimmt. Das zu klassifizierende Arbeitsprodukt (125, 135) wird als Gutprodukt klassifiziert, wenn die bestimmte Wahrscheinlichkeit größer oder gleich einem vorbestimmten Schwellenwert ist.

## Beschreibung

Die vorliegende Erfindung betrifft eine Verpackungsmaschine gemäß dem Anspruch 1 und ein Verfahren zum Betrieb einer entsprechenden Verpackungsmaschine gemäß dem Anspruch 16. Ferner bezieht sich die Erfindung auf ein Verfahren zur Klassifizierung von Arbeitsprodukten einer Verpackungsmaschine gemäß Anspruch 3, einer Vorrichtung zur Klassifizierung von Arbeitsprodukten einer Verpackungsmaschine gemäß Anspruch 14 und ein oder mehrere computerlesbare Speichermedien mit Befehlen zur Ausführung eines Verfahrens zur Klassifizierung von Arbeitsprodukten einer Verpackungsmaschine gemäß Anspruch 15.

Eine moderne Verpackungsmaschine kann eine Vielzahl von Arbeitsstationen aufweisen, die jeweils ein vorläufiges Arbeitsprodukt erzeugen, das in der nächsten Arbeitsstation weiterverarbeitet wird. Nach Durchlaufen aller Arbeitsstationen liefert die Verpackungsmaschine ein endgültiges Arbeitsprodukt. Sowohl jede der Arbeitsstationen, als auch die gesamte Verpackungsmaschine können fehlerhafte Arbeitsprodukte erzeugen. Zur Qualitätssicherung für die jeweiligen Arbeitsprodukte einer Verpackungsmaschine ist deshalb eine Begutachtung der Arbeitsprodukte notwendig, um zu entscheiden, ob eine Arbeitsprodukt vorher festgelegte Qualitätsanforderungen erfüllt oder nicht. Wenn ein Arbeitsprodukt die Qualitätsanforderungen erfüllt spricht man von einem Gutprodukt, andernfalls von einem Schlechtprodukt. Es wird also eine Einteilung oder Klassifizierung in Gutprodukte und Schlechtprodukte vorgenommen, z.B. um die Schlechtprodukte zu erkennen und auszusortieren oder nachzubearbeiten. Eine solche Begutachtung kann durch menschliche Begutachter oder Begutachterinnen erfolgen.

Um die Effizienz und die Genauigkeit der Begutachtung zu steigern, können alternativ oder zusätzlich automatische Erkennungsverfahren eingesetzt werden, um eine Unterscheidung zwischen Gut- und Schlechtprodukten zu treffen. Dabei können die Arbeitsprodukte durch einen oder mehrere optische Sensoren erfasst werden. Aus den erzeugten Bilddaten können dann Bildmerkmale extrahiert und Zahlenwerte für diese Bildmerkmale berechnet werden. Dabei kann es sich beispielsweise im Fall einer Prüfung auf Vorhandensein eines Produktteils um die Anzahl von Pixeln in einer durch Farbe oder Kontrast abgegrenzten Pixelansammlung handeln. Bekannte Verfahren nutzen zur Einteilung in Gut- oder Schlechtprodukte einstellbare Toleranzintervalle für die berechneten Bildmerkmale. Falls der berechnete Wert für eines oder mehrere der extrahierten Bildmerkmale nicht innerhalb des entsprechenden festgelegten Toleranzintervalls liegt, wird das Arbeitsprodukt als Schlechtprodukt erkannt. Da die Bildmerkmale für eine bestimmte Verpackungsaufgabe individuell gewählt werden müssen und die Toleranzintervalle zudem von den spezifischen Details der Aufstellungssituation und der verwendeten Sensorik abhängen, müssen die Toleranzintervalle vor Ort manuell ermittelt werden. Dazu sind aufwendige und zeitintensive Testreihen notwendig, die individuell für eine Verpackungsmaschine in der Produktionsumgebung durchgeführt werden müssen, in der der Regelbetrieb geplant ist. Dieselben Schritte müssen auch durchgeführt werden, wenn beispielweise die Verpackungsmaschine auf eine neue Produktreihe umgestellt wird. Das bekannte Verfahren ist personal-, zeit- und kostenaufwendig. Durch den hohen Aufwand ist auch die praktisch erzielbare Genauigkeit der ermittelten Toleranzintervalle begrenzt und damit die Effektivität der automatischen Schlechtprodukterkennung, was zu einer erhöhten Falscherkennungsrate führen kann. Als Folge davon kann die Effizient der Verpackungsmaschine sinken, weil z.B. eigentliche Gutprodukte fälschlich als Schlechtprodukte erkannt und dementsprechend aussortiert oder manuell nachgeprüft werden.

Aufgabe der Erfindung ist es, eine verbesserte Gut- bzw. Schlechtprodukterkennung für eine Verpackungsmaschine bereitzustellen, die möglichst weitgehend ohne die manuelle Einstellung von Toleranzintervallen auskommt.

Diese Aufgabe wird gelöst durch eine Verpackungsmaschine gemäß Anspruch 1, durch ein Verfahren zur Klassifizierung von Arbeitsprodukten gemäß Anspruch 3, anhand einer Vorrichtung zur Klassifizierung von Arbeitsprodukten gemäß Anspruch 14, durch ein oder mehrere computerlesbare Speichermedien gemäß Anspruch 15 oder anhand eines Verfahrens zu Betrieb einer Verpackungsmaschine gemäß Anspruch 16. Die vorliegende Erfindung reduziert den Aufwand zur anfänglichen Einstellung des Erkennungssystems erheblich und erlaubt damit eine genauere Bestimmung von Bildmerkmalstoleranzen, was wiederrum zu einer verbesserten Erkennungsleistung für Gut- bzw. Schlechtprodukte führt. Die vereinfachte Initialisierung des Erkennungssystems verringert den Zeitaufwand für die Aufstellung und die Umstellung die Verpackungsmaschine. Die verbesserte Erkennungsleistung führt insgesamt zu einer Verbesserung der Leistungsfähigkeit der Verpackungsmaschine. Zudem ergibt sich ein erhöhtes Potential zur Steigerung der Wirtschaftlichkeit und der Effizient der Verpackungsmaschine.

Vorteilhafte Weiterbildungen der Erfindung sind durch die jeweiligen Gegenstände der Unteransprüche gegeben.

Die Erfindung bezieht sich auf eine Verpackungsmaschine, die einen optischen Sensor und eine Recheneinheit umfasst. Der optische Sensor ist eingerichtet, um Bilddaten von Arbeitsprodukten der Verpackungsmaschine zu erzeugen. Die Recheneinheit ist eingerichtet zum Klassifizieren eines Arbeitsproduktes der Verpackungsmaschine als Gutprodukt oder Schlechtprodukt. Ein Gutprodukt ist dabei als ein Arbeitsprodukt zu verstehen, das vorgegebenen Qualitätsanforderungen entspricht. Das Klassifizieren des Arbeitsproduktes umfasst das Bestimmen einer Vielzahl von Werten für jedes Bildmerkmal eines oder mehrerer vorbestimmter Bildmerkmale in einem Initialisierungsbetrieb der Verpackungsmaschine. Das Bestimmen der Vielzahl von Werten umfasst das Empfangen von Bilddaten eines jeden Arbeitsproduktes aus einem Initialisierungssatz von Arbeitsprodukten von dem optischen Sensor, das Extrahieren der vorbestimmten Bildmerkmale für jedes Arbeitsprodukt des Initialisierungssatzes aus den empfangenen Bilddaten des jeweiligen Arbeitsproduktes, und das Bestimmen eines Wertes für jedes extrahierte Bildmerkmal für jedes Arbeitsprodukt. Das Klassifizieren des Arbeitsproduktes umfasst ferner das Bestimmen einer entsprechenden Häufigkeitsverteilung (z.B. eine Häufigkeitsdichteverteilung) der jeweiligen Vielzahl von Werten für jedes vorbestimmte Bildmerkmal über alle Arbeitsprodukte des Initialisierungssatzes, wobei der Initialisierungssatz eine Vielzahl von Gutprodukten umfasst. Das Klassifizieren des Arbeitsproduktes umfasst außerdem das Empfangen von Bilddaten des zu klassifizierenden Arbeitsproduktes von dem optischen Sensor während eines Regelbetriebs der Verpackungsmaschine, das Extrahieren jedes Bildmerkmals der vorbestimmten Bildmerkmale aus den empfangenen Bilddaten des zu klassifizierenden Arbeitsprodukts, und das Bestimmen eines Wertes für jedes der extrahierten Bildmerkmale. Schließlich umfasst das Klassifizieren des Arbeitsproduktes weiterhin das Bestimmen einer Wahrscheinlichkeit dafür, dass das zu klassifizierende Arbeitsprodukt ein Gutprodukt ist, basierend auf den Werten für das zu klassifizierende Arbeitsprodukt und den Häufigkeitsverteilungen, und das Klassifizieren des zu klassifizierenden Arbeitsproduktes als Gutprodukt, wenn die bestimmte Wahrscheinlichkeit größer oder gleich einem vorbestimmten Schwellenwert ist.

Die Erfindung betrifft zudem ein Verfahren zur Klassifizierung von Arbeitsprodukten einer Verpackungsmaschine als Gutprodukte oder Schlechtprodukte, wobei ein Gutprodukt ein Arbeitsprodukt ist, das vorgegebenen Qualitätsanforderungen entspricht. Die Verpackungsmaschine weist einen optischen Sensor auf, der eingerichtet ist, Bilddaten von den Arbeitsprodukten der Verpackungsmaschine zu erzeugen. Das Verfahren umfasst das Bestimmen einer Vielzahl von Werten für jedes Bildmerkmal eines oder mehrerer vorbestimmter Bildmerkmale in einem Initialisierungsbetrieb der Verpackungsmaschine. Dazu werden Bilddaten eines jeden Arbeitsproduktes aus einem Initialisierungssatz von Arbeitsprodukten von dem optischen Sensor empfangen. Für jedes Arbeitsprodukt des Initialisierungssatzes werden vorbestimmten Bildmerkmale aus den empfangenen Bilddaten des jeweiligen Arbeitsproduktes extrahiert und für jedes extrahierte Bildmerkmal wird ein Wert (z.B. eine reelle Zahl) bestimmt. Das Verfahren umfasst ferner das Bestimmen einer entsprechenden Häufigkeitsverteilung (z.B. eine Häufigkeitsdichteverteilung) der jeweiligen Vielzahl von Werten für jedes vorbestimmte Bildmerkmal über alle Arbeitsprodukte des Initialisierungssatzes, wobei der Initialisierungssatz eine Vielzahl von Gutprodukten umfasst.

Erfindungsgemäß umfasst das Verfahren zudem das Empfangen von Bilddaten eines zu klassifizierenden Arbeitsproduktes von dem optischen Sensor, während eines Regelbetriebs der Verpackungsmaschine. Aus den empfangenen Bilddaten des zu klassifizierenden Arbeitsprodukts wird jedes Bildmerkmal der vorbestimmten Bildmerkmale extrahiert und für jedes extrahierte Bildmerkmal wird ein Wert (z.B. eine reelle Zahl) bestimmt. Basierend auf den bestimmten Werten für das zu klassifizierende Arbeitsprodukt und den zuvor bestimmten Häufigkeitsverteilungen wird eine Wahrscheinlichkeit dafür bestimm, dass das zu klassifizierende Arbeitsprodukt ein Gutprodukt ist. Wenn die bestimmte Wahrscheinlichkeit größer oder gleich einem vorbestimmten Schwellenwert ist, wird das zu klassifizierenden Arbeitsproduktes als Gutprodukt klassifiziert.

Die Erfindung betrifft auch eine Vorrichtung zur Klassifizierung von Arbeitsprodukten einer Verpackungsmaschine, die einen optischen Sensor aufweist, der eingerichtet ist, Bilddaten von den Arbeitsprodukten der Verpackungsmaschine zu erzeugen. Die Vorrichtung umfasst eine Recheneinheit, die eingerichtet ist, das obige Verfahren auszuführen.

Weiterhin betrifft die Erfindung ein oder mehrere computerlesbare Speichermedien, mit ausführbaren Befehlen, die bei Ausführung durch eine Verarbeitungsvorrichtung eines das obige Verfahren zur Klassifizierung von Arbeitsprodukten einer Verpackungsmaschine auszuführen.

Schließlich betrifft die Erfindung ein Verfahren zum Betrieb einer Verpackungsmaschine, die einen optischen Sensor umfasst, der eingerichtet ist, Bilddaten von Arbeitsprodukten der Verpackungsmaschine zu erzeugen. Das Verfahren umfasst das Betreiben der Verpackungsmaschine in einem Initialisierungsbetrieb zur Bestimmung einer Vielzahl von Werten für jedes Bildmerkmal eines oder mehrerer vorbestimmter Bildmerkmale. Dabei werden Bilddaten eines jeden Arbeitsproduktes aus einem Initialisierungssatz von Arbeitsprodukten von dem optischen Sensor empfangen. Für jedes Arbeitsprodukt des Initialisierungssatzes werden die vorbestimmten Bildmerkmale aus den empfangenen Bilddaten des jeweiligen Arbeitsproduktes extrahiert und ein Wert (z.B. ein reeller Zahlenwert) für jedes extrahierte Bildmerkmal bestimmt. Das Betreiben der Verpackungsmaschine im Initialisierungsbetrieb umfasst ferner das Bestimmen einer entsprechenden Häufigkeitsverteilung (z.B. eine Häufigkeitsdichteverteilung) der jeweiligen Vielzahl von Werten für jedes vorbestimmte Bildmerkmal über alle Arbeitsprodukte des Initialisierungssatzes, wobei der Initialisierungssatz eine Vielzahl von Gutprodukten umfasst, wobei ein Gutprodukt ein Arbeitsprodukt ist, das vorgegebenen Qualitätsanforderungen entspricht.

Das erfindungsgemäße Verfahren zum Betrieb der Verpackungsmaschine umfasst zudem das Betreiben der Verpackungsmaschine in einem Regelbetrieb. Im Regelbetrieb werden Bilddaten eines zu klassifizierenden Arbeitsproduktes von dem optischen Sensor empfangen, jedes Bildmerkmal der vorbestimmten Bildmerkmale wird aus den empfangenen Bilddaten des zu klassifizierenden Arbeitsprodukts extrahiert und eine Wert (z.B. ein reeller Zahlenwert) wird für jedes der extrahierten Bildmerkmale bestimmt. Basierend auf den Werten für das zu klassifizierende Arbeitsprodukt und den Häufigkeitsverteilungen wird einer Wahrscheinlichkeit dafür bestimmt, dass das zu klassifizierende Arbeitsprodukt ein Gutprodukt ist. Das zu klassifizierende Arbeitsprodukt wird als Gutprodukt klassifiziert, wenn die bestimmte Wahrscheinlichkeit größer oder gleich einem vorbestimmten Schwellenwert ist.

Die vorliegende Erfindung ermöglicht die Optimierung und insbesondere eine erhebliche Vereinfachung der Konfiguration optischer Gut- bzw. Schlechtprodukterkennung. Anstelle eines manuellen Konfigurationsprozesses, bei dem durch Versuch und Irrtum in aufwendigen Testreihen für verschiedene optische Bildmerkmalswerte Toleranzintervalle festgelegt werden müssen, tritt in der vorliegenden Erfindung eine automatisierte Initialisierungs- bzw. Trainingsphase, in der eine statistische Auswertung der Bildmerkmalswerte von Gutprodukten vorgenommen wird. Diese statistische Auswertung ermöglicht in produktiven Einsatz die Berechnung einer Wahrscheinlichkeit, dass es sich bei dem gegenwärtig begutachteten Produkt um ein Gutprodukt handelt (z.B. mittels eines Bayes-Klassifikators).

Bei der erfindungsgemäßen Verpackungsmaschine kann es sich beispielsweise um eine Schalenverschließmaschine, eine Tiefziehverpackungsmaschine, eine Kammermaschine, eine Kammerbandmaschine oder eine Etikettierungsmaschine handeln. Die Verpackungsmaschine kann eine oder mehrere Arbeitsstationen aufweisen. Falls eine Maschine mehrere Arbeitsstationen aufweist, können diese jeweils einen Teilschritt des gesamten Verarbeitungsprozesses der Verpackungsmaschine durchführen. Das Arbeitsprodukt einer der Arbeitsstationen kann dann einer nachfolgenden Arbeitsstation zu Weiterverarbeitung zugeführt werden und/oder ein Arbeitsprodukt einer vorherigen Arbeitsstation kann von der Arbeitsstation weiterverarbeitet werden. Jede Arbeitsstation kann als eigenständige Verpackungsmaschine fungieren oder im Verbund mit einer oder mehreren anderen Arbeitsstationen eine komplexere Verpackungsmaschine bilden.

Der optische Sensor kann jeder geeignete bildgebende Sensor sein, der Bilddaten aus Licht im sichtbaren, im UV, oder im infraroten Spektralbereich erzeugt. Dabei kann es sich beispielsweise um eine CMOS- oder CCD-Kamera, eine Infrarotkamera und/oder eine Time-of-Flight-Kamera handeln. Die erzeugten Bilddaten können als zweidimensionales Pixelarray aufgezeichnet werden. Jedem Pixel können dabei ein oder mehrere Farbwerte (z.B. ein Graustufenwert, Rot-, Grün- und Blauwerte oder Cyan-, Magenta, Gelb und Schwarzwerte) zugeordnet sein und/oder ein Wert der den Abstand des dem Pixel entsprechenden Bildpunktes von der Kamera angibt.

Die Recheneinheiten der Verpackungsmaschine und/oder der Vorrichtung zur Klassifizierung von Arbeitsprodukten einer Verpackungsmaschine können jeweils prozessorgesteuerte Datenverarbeitungsvorrichtungen sein, die einen oder mehrere Prozessoren, einen Arbeitsspeicher und einen Massenspeicher umfassen.

In der vorliegenden Erfindung wird eine Klassifizierung von Arbeitsprodukten der Verpackungsmaschine als Gutprodukt oder Schlechtprodukt durchgeführt. Die Arbeitsprodukte können dabei endgültige Arbeitsprodukte der Verpackungsmaschine sein, die als Ergebnis eines möglicherweise mehrstufigen Verarbeitungsprozesses das Endprodukt der Verpackungsmaschine darstellen. Ein Arbeitsprodukt kann auch ein vorläufiges Arbeitsprodukt der Verpackungsmaschine sein, das als Ergebnis eines Verarbeitungsprozesses einer Arbeitsstation der Verpackungsmaschine erzeugt wird und anschließend von einer nachgelagerten Arbeitsstation der Verpackungsmaschine weiterverarbeitet wird. Ein vorläufiges oder endgültiges Arbeitsprodukt wird als Gutprodukt angesehen, wenn es vorgegebene Qualitätsanforderungen erfüllt. Diese Qualitätsanforderungen können spezifisch sein für den Typ des Arbeitsproduktes, sind aber typischerweise gültig für alle gleichartigen in einer bestimmten Konfiguration der Verpackungsmaschine erzeugten Arbeitsprodukte. Die Erfindung kann so aufgeführt sein, dass ein Produkt nur entweder ein Gutprodukt oder ein Schlechtprodukt sein kann, und nicht beides oder keines von beiden. In diesem Fall zerfällt die Menge von erzeugten Arbeitsprodukten in zwei überscheidungsfreie Mengen, eine Menge von Gutprodukten und eine Menge von Schlechtprodukten. Damit ist die Gutprodukterkennung gleichbedeutend mit der Schlechtprodukterkennung, da jedes Produkt, das nicht als Gutprodukt erkannt wird automatisch ein Schlechtprodukt ist und umgekehrt. Alternativ kann es mehr als zwei Klassifizierungen geben, beispielsweise in Gutprodukte, Schlechtprodukte und Produkte die nicht mit ausreichender Sicherheit als Gut- oder Schlechtprodukte klassifiziert werden können. Letztere Klasse von Produkten kann dann evtl. einer manuellen Qualitätsüberprüfung unterzogen werden.

Zur computergestützten Gut- bzw. Schlechtprodukterkennung werden erfindungsgemäß sowohl im Initialisierungsbetrieb als auch im Regelbetrieb Bilddaten von Arbeitsprodukten erzeugt, d.h. es werden computerverwertbare (z.B. digitale) Bilder der Arbeitsprodukte durch den Sensor aufgenommen, die dann für die Einstufung des abgebildeten Arbeitsproduktes als Gutprodukt herangezogen werden. In jedem Bild werden anschließend ein oder mehrere Bildmerkmale identifiziert bzw. extrahiert, die charakteristisch für das jeweilige begutachtete Arbeitsprodukt sind. Diese Bildmerkmale müssen im Vorfeld spezifisch für die zu begutachtenden Arbeitsprodukte festgelegt werden. Aus den erzeugten Bilddaten (d.h. den digitalen Bildern) können die vorbestimmten Bildmerkmale durch Anwendung von Bildverarbeitungsalgorithmen extrahiert werden. Ein solches Bildmerkmal kann beispielsweise eine Ansammlung von Pixeln in einem vorbestimmten Abschnitt der Bilddaten sein, die eine bestimmte Form aufweist (z.B. kreisförmig, bogenförmig, dreieckig, oder quadratisch) und/oder die eine Kontrastabgrenzung oder Farbabgrenzung zu den umliegenden angeordneten Pixeln aufweist. Durch das Extrahieren oder identifizieren eines Bildmerkmals werden dem Bildmerkmal Pixel aus den Bilddaten des Arbeitsproduktes zugeordnet.

Jedem identifizierten bzw. extrahierten Bildmerkmal wird ein Zahlenwert zugeordnet. Vorzugsweise handelt es sich dabei um eine reelle Zahl, die das Bildmerkmal charakterisiert. Diese Zahl kann anhand der Pixel berechnet werden, die dem Bildmerkmal zugeordnet werden. Die Zahl kann ein Wert sein, der mit der Geometrie des Bildmerkmals verbunden ist. Beispielsweise kann die Zahl die Anzahl der Pixel des Bildmerkmals sein, ein durchschnittlicher, maximaler oder minimaler Radius einer Fläche, die durch die Pixel des Bildmerkmals beschrieben wird, eine Abweichung von der Kreisform (z.B. als Verhältnis eines maximalen zu einem minimalen Radius) der Fläche. Falls die Fläche die durch die Pixel des Bildmerkmals gebildet wird nicht rotationssymmetrisch ist, kann die zugeordnete Zahl ein Verdrehungswinkel der Fläche sein. Die Pixel des Bildmerkmals können auch durch eine Kurve beschrieben werden (z.B. eine Gerade, eine Parabel, ein Polynom höheren Grades, oder eine andere geometrische Kurve). Beispielsweise können die Pixel mit der Methode der kleinsten Quadrate durch eine Kurve angenähert werden. Dem Bildmerkmal kann dann eine mathematische Eigenschaft dieser Kurve zugeordnet werden (z.B. Länge, Krümmung, oder Steigung der Kurve). Alternativ oder zusätzlich kann der zugeordnete Zahlenwert aus den Farbinformationen der dem Bildmerkmal zugeordneten Pixel berechnet werden (z.B. ein durchschnittlicher, maximaler, oder minimaler Graustufenwert oder ein mittlerer Farbwert der Pixel des Bildmerkmals). Welcher Zahlenwert dem Bildmerkmal zugeordnet wird hängt von dem konkreten Bildmerkmal und von dem Arbeitsprodukt ab, das klassifiziert werden soll. Die Bildmerkmale und die zugeordneten Zahlenwerte werden im Vorfeld so gewählt, dass eine Unterscheidung von Gut- und Schlechtprodukten durch Bestimmung der Zahlenwerte der Bildmerkmale aus den Bilddaten für ein Arbeitsprodukt möglich ist.

Durch kleine Variationen im Verarbeitungsprozess der Verpackungsmaschine und durch Unzulänglichkeiten des optischen Sensors (z.B. Bildrauschen) kann es zu Variationen der genauen Produktbeschaffenheit und in der Aufzeichnung der Bilddaten des Arbeitsproduktes kommen. Dadurch werden die Zahlenwerte für die Bildmerkmale bei Gutprodukten jeweils um einen Mittelwert gestreut sein. Zur Feststellung ob ein Arbeitsprodukt ein Gutprodukt ist, werden die Bildmerkmale aus den Bilddaten für das Arbeitsprodukt extrahiert und die zugehörigen Zahlenwerte bestimmt. Die Aufgabe besteht nun darin zu bestimmen, ob die Zahlenwerte ein Gutprodukt beschreiben. In der vorliegenden Erfindung wird dieses Aufgabe gelöst, indem in einer Initialisierungsphase eine statistische Auswertung der Zahlenwerte der Bildmerkmale für Gutprodukte vorgenommen wird. Dazu wird die Verpackungsmaschine in einer Initialisierungsphase betrieben, in der eine große Anzahl von Gutprodukten erzeugt wird. Für jedes der erzeugten Gutprodukte nimmt der optische Sensor Bilddaten auf und übermittelt sie an die Recheneinheit. Diese extrahiert aus jedem Bild die vorbestimmten Bildmerkmale und berechnet den zugehörigen Zahlenwert. Für jedes Bildmerkmal wird dadurch eine Menge von Zahlenwerten ermittelt, die jeweils Gutprodukten entsprechen. Für jedes Bildmerkmal kann dann eine Häufigkeitsverteilung (z.B. eine Häufigkeitsdichteverteilung) der für das jeweilige Bildmerkmal in der Initialisierungsphase ermittelten Zahlenwerte bestimmt werden.

Für ein Arbeitsprodukt der Verpackungsmaschine, das im Regelbetrieb der Verpackungsmaschine klassifiziert werden soll, werden dann ebenfalls Bilddaten durch den optischen Sensor aufgezeichnet und an die Recheneinheit übermittelt. Wie im Initialisierungsbetrieb werden aus den Bilddaten des Arbeitsproduktes die Bildmerkmale extrahiert und zu den Bildmerkmalen Zahlenwerte aus den Bilddaten des Arbeitsproduktes bestimmt. Unter Verwendung der für die einzelnen Bildmerkmale bestimmten Häufigkeitsverteilungen von zugehörigen Zahlenwerten kann eine Wahrscheinlichkeit bzw. ein Wahrscheinlichkeitswert bestimmt werden, dass die für das Arbeitsprodukt bestimmte Kombination von Zahlenwerten für die extrahierten Bildmerkmale zu einem Gutprodukt gehören.

Sowohl im Initialisierungsbetrieb als auch im Regelbetrieb werden vorbestimmte Bildmerkmale aus den von dem optischen Sensor empfangen Bilddaten extrahiert (bzw. in den Bilddaten identifiziert). Jedes der vorbestimmten Bildmerkmale kann aus den empfangenen Bilddaten des jeweiligen Arbeitsproduktes durch Anwendung eines entsprechenden Extrahierungsalgorithmus auf die Bilddaten des jeweiligen Arbeitsproduktes extrahiert werde. Die Bilddaten des jeweiligen Arbeitsproduktes können eine Vielzahl von Pixelwerten umfassen und das Anwenden des entsprechenden Extrahierungsalgorithmus auf die Bilddaten des jeweiligen Arbeitsproduktes kann das Anwenden einer oder mehrerer vorgegebener oder gelernter Rechenvorschriften auf die Pixelwerte der Bilddaten umfassen. Die Rechenvorschriften können z.B. den Pixelwert in Abhängigkeit seines eigenen Pixelwertes und/oder in Abhängigkeit von Pixelwerten benachbarter Pixel verändern (z.B. durch Anwendung kernelbasierter Filter). Der Extrahierungsalgorithmus für ein Bildmerkmal kann ein klassischer, programmatischer Extrahierungsalgorithmus (z.B. eine vorbestimmte Folge von nacheinander ausgeführten Bildverarbeitungsbefehlen) sein. Alternativ kann der Extrahierungsalgorithmus ein Machine-Learning-Modell (z.B. ein Neuronales Netz) umfassen, das auf die Extrahierung des entsprechend Bildmerkmals trainiert wurde. Beispielsweise kann der Extrahierungsalgorithmus ein auf die Extrahierung eines Bildmerkmals trainierter Deep-Learning-Algorithmus (z.B. ein Convolutional Neural Network) sein.

Zur Klassifizierung im Regelbetrieb der Verpackungsmaschine kann zu jeder für die vorbestimmten Bildmerkmale bestimmten Häufigkeitsverteilung eine entsprechende Wahrscheinlichkeitsverteilung für die jeweilige Vielzahl von Werten für das entsprechende vorbestimmte Bildmerkmal über alle Arbeitsprodukte des Initialisierungssatzes berechnet werden. Dazu kann die jeweilige Häufigkeitsverteilung mittels der Gesamtzahl von Zahlenwerten, aus denen die Häufigkeitsverteilung bestimmt wurde normiert werden. Zur Bestimmung der entsprechenden Wahrscheinlichkeitsverteilung kann eine Berechnung von Funktionsparametern einer vorgegebenen Wahrscheinlichkeitsfunktion (z.B. eine Wahrscheinlichkeitsdichtefunktion für eine Gauß- oder Poissonverteilung) für das jeweilige Bildmerkmal mittels der entsprechenden Häufigkeitsverteilung berechnet werden. Die Berechnung der Funktionsparameter der vorgegebenen Wahrscheinlichkeitsverteilungsfunktion kann die Bestimmung eines Mittelwertes, einer Standardabweichung, eines größten Wertes, eines kleinsten Wertes, einer Schiefe, und/oder eines Exzess-Wertes aus der entsprechenden Häufigkeitsverteilung umfassen.

Das Klassifizieren des Arbeitsproduktes kann das Bestimmen eines Bayes-Klassifikators mittels der bestimmten Wahrscheinlichkeitsverteilungen umfassen. Alternativ oder zusätzlich kann das Klassifizieren des Arbeitsproduktes eine Bestimmung eines entsprechenden Toleranzintervalls für die Werte jedes der vorbestimmten Bildmerkmale basierend auf der Häufigkeitsverteilung der Vielzahl von Werten für das jeweilige vorbestimmte Bildmerkmal umfassen. Dabei kann aus der Häufigkeitsverteilung wie oben beschrieben eine Wahrscheinlichkeitsverteilung für die Werte eines Bildmerkmals berechnet werden. Aus einem vorbestimmten Schwellenwert für die Wahrscheinlichkeit, dass ein Wert aus einem Toleranzintervall für das jeweilig Bildmerkmal für ein Gutprodukt realisiert wird, und der Wahrscheinlichkeitsfunktion für das Bildmerkmal kann das Toleranzintervall um den Erwartungswert der bestimmten Wahrscheinlichkeitsverteilung berechnet werden.

Aus den Häufigkeitsverteilungen, die aus der Daten der Initialisierungsphase für die Werte der Bildmerkmale berechnet wurden, und den für ein Arbeitsprodukt aus den entsprechenden Bilddaten ermittelten Werten für die Bildmerkmale kann eine Wahrscheinlichkeit bestimmt werden, dass das zu klassifizierende Arbeitsprodukt ein Gutprodukt ist. Das Bestimmen dieser Wahrscheinlichkeit kann das Bestimmen einer bedingten Wahrscheinlichkeit dafür umfassen, dass die für das zu klassifizierende Arbeitsprodukt bestimmten Werte der vorbestimmten Bildmerkmale für ein Gutprodukt auftreten. Beispielsweise kann diese bedingte Wahrscheinlichkeit als Produkt bedingter Wahrscheinlichkeiten berechnet werden, wobei jede der bedingten Wahrscheinlichkeiten des Produkts eine bedingte Wahrscheinlichkeit angibt, dass ein einzelner für das zu klassifizierende Arbeitsprodukt bestimmter Werte eines der vorbestimmten Bildmerkmale für ein Gutprodukt auftritt. Vorteilhaft ist es, wenn das Bestimmen der Wahrscheinlichkeit, dass das zu klassifizierende Arbeitsprodukt ein Gutprodukt ist, das Anwenden des Bayes-Klassifikators auf die für das zu klassifizierende Arbeitsprodukt bestimmten Werte der vorbestimmten Bildmerkmale umfasst.

Die Verpackungsmaschine kann eine Steuerungseinheit umfassen. Die Steuerungseinheit kann eingerichtet sein, den Verarbeitungsprozess der Verpackungsmaschine zu steuern. Ein zu klassifizierendes Arbeitsprodukt kann als Schlechtprodukt klassifiziert werden, wenn die bestimmte Wahrscheinlichkeit, dass das zu klassifizierende Arbeitsprodukt ein Gutprodukt ist, kleiner als der vorbestimmte Schwellenwert ist. Wenn das klassifizierte Arbeitsprodukt ein als Schlechtprodukt klassifiziertes vorläufiges Arbeitsprodukt ist, ist es besonders vorteilhaft, wenn Steuerbefehle an die Steuerungseinheit der Verpackungsmaschine übermittelt werden, um die Verpackungsmaschine dazu zu veranlassen Korrekturschritte zur Verbesserung des klassifizierten Arbeitsproduktes auszuführen. Dadurch wird eine Nachbesserung eines vorläufigen Arbeitsproduktes ermöglicht, wodurch die Prozesssteuerung der Verpackungsmaschine verbessert und die Schlechtproduktrate verringert wird.

Wenn das klassifizierte Arbeitsprodukt ein als Schlechtprodukt klassifiziertes endgültiges Arbeitsprodukt ist, ist es besonders vorteilhaft, wenn Steuerbefehle an die Steuerungseinheit übermittelt werden, um die Verpackungsmaschine dazu zu veranlassen das klassifizierte Arbeitsprodukt auszusortieren oder als Schlechtprodukt zu kennzeichnen. Damit kann verhindert werden, dass Schlechtprodukte versehentlich als Gutprodukte ausgeliefert werden. Dadurch wird die Qualitätskontrolle der Verpackungsmaschine verbessert.

Im Initialisierungsbetrieb werden eine Menge von Arbeitsprodukten in einem Initialisierungssatz von Arbeitsprodukten erzeugt. Die Arbeitsprodukte im Initialisierungssatz können ausschließlich Gutprodukte sein. Der Initialisierungssatz kann auch (einzelne) Schlechtprodukte umfassen, wobei die Anzahl der Gutprodukte die Anzahl der Schlechtprodukte im Initialisierungssatz so weit übertrifft, dass der Einfluss der Schlechtprodukte auf die Häufigkeitsverteilung vernachlässigbar ist. Beispielsweise können mehr als 90%, 95% oder 99% der Arbeitsprodukte im Initialisierungssatz Gutprodukte sein.

Die Recheneinheit kann ein Teil der Verpackungsmaschine sein oder kann als Teil einer externen Vorrichtung ausgeführt sein, die über ein Datennetzwerk und/oder eine Datenaustauschschnittstelle der Verpackungsmaschine mit der Verpackungsmaschine kommuniziert.

Im Folgenden werden vorteilhafte Ausführungsformen der Erfindung anhand einer Zeichnung näher erläutert. Im Einzelnen zeigen:
- Fig. 1: ein Ausführungsbeispiel einer erfindungsgemäßen Verpackungsmaschine,
- Fig. 2: ein Ausführungsbeispiel einer erfindungsgemäßen Vorrichtung zur Klassifizierung von Arbeitsprodukten einer Verpackungsmaschine,
- Fig. 3: ein Ausführungsbeispiel eines erfindungsgemäßen Verfahrens zur Klassifizierung von Arbeitsprodukten einer Verpackungsmaschine,
- Fig. 4: ein Ausführungsbeispiel für die erfindungsgemäße Bestimmung von Häufigkeitsverteilungen der Werte von Bildmerkmalen, und
- Fig. 5: ein Ausführungsbeispiel einer erfindungsgemäßen Datenverarbeitungsvorrichtung.
Gleiche Komponenten sind in den Figuren durchgängig mit gleichen oder einander entsprechenden Bezugszeichen versehen.

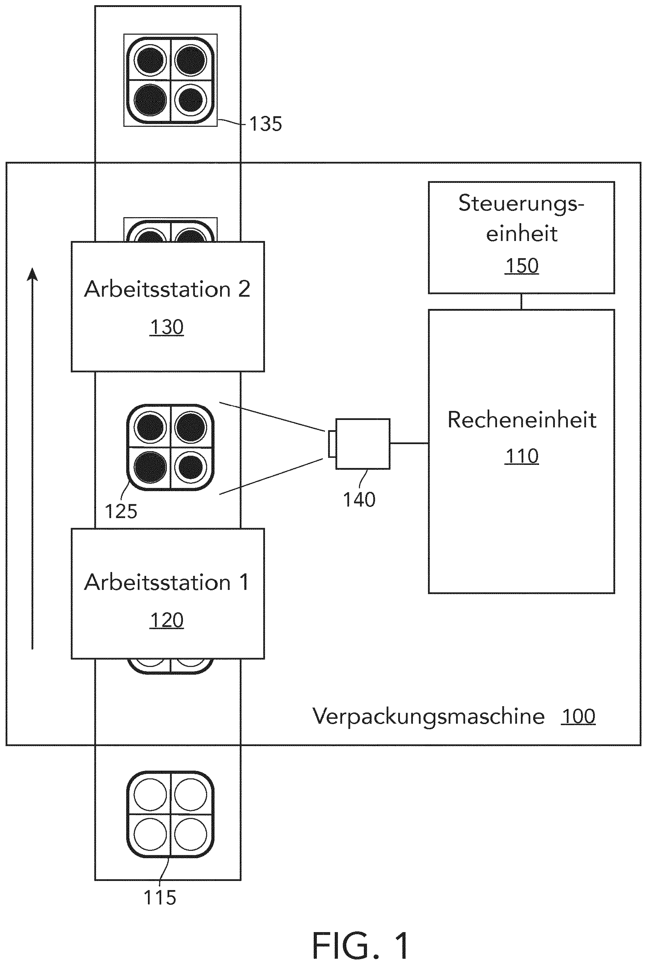

Fig. 1 zeigt ein Ausführungsbeispiel einer erfindungsgemäßen Verpackungsmaschine 100. Bei der Verpackungsmaschine 100 kann es sich beispielsweise um eine Schalenverschließmaschine, eine Tiefziehverpackungsmaschine, eine Kammermaschine, eine Kammerbandmaschine oder eine Etikettierungsmaschine handeln. Die Verpackungsmaschine 100 kann eine oder mehrere Arbeitsstationen umfassen. Die Fig. 1 zeigt eine erste Arbeitsstation 120 und eine zweite Arbeitsstation 130. Im gezeigten Beispiel verarbeitet die erste Arbeitsstation 120 ein oder mehrere Eingangsprodukte 115 zu einem oder mehreren vorläufigen Arbeitsprodukten 125. In dem abgebildeten Ausführungsbeispiel handelt es sich bei der ersten Arbeitsstation um eine Befüllungsstation, der als Ausgangsprodukt 115 ein Behälter (z.B. ein Kunststoffbehälter) zugeführt wird, den die Arbeitsstation mit vier verschiedenen Produkten befüllt (im gezeigten Beispiel sind die vier Produkte kreisförmig und werden durch vier verschieden große Kreise symbolisiert). Die vorläufigen Arbeitsprodukte 125 der ersten Arbeitsstation werden von der zweiten Arbeitsstation 120 zu einem oder mehreren Endprodukten der Verpackungsmaschine weiterverarbeitet. Im gezeigten Beispiel handelt es sich bei der zweiten Arbeitsstation um eine Verpackungsstation (z.B. eine Tiefziehverpackungsstation), die den befüllten Behälter verpackt. Eine erfindungsgemäße Verpackungsmaschine 100 ist nicht auf die beschrieben beispielhaften Arbeitsstationen 120 oder 130 oder die gezeigte Anzahl von Arbeitsstationen beschränkt, sie kann vielmehr jede sinnvolle Anzahl und Kombination von Verpackungsstationen umfassen. So kann beispielsweise nach der Arbeitsstation 130 eine Etikettierungsstation vorgesehen sein, die die verpackten, befüllten Behälter mit einem Produktaufkleber versieht. Eine erfindungsgemäße Verpackungsmaschine 100 kann auch nur eine einzige Arbeitsstation umfassen.

Die Verpackungsmaschine 100 umfasst einen optischen Sensor 140, der Bilddaten (z.B. eine digitale Bilddatei) von einem Arbeitsprodukt erzeugt und diese Bilddaten an eine Recheneinheit 110 übermittelt. Im gezeigten Beispiel erfasst der Sensor 140 Bilddaten zum vorläufige Arbeitsprodukt 125. Alternativ kann der Sensor 140 auch Bilddaten des endgültigen Arbeitsproduktes 135 erfassen. Der optische Sensor kann jeder geeignete bildgebende Sensor sein, der Bilddaten aus Licht im sichtbaren, im UV, oder im infraroten Spektralbereich erzeugt. Dabei kann es sich beispielsweise um eine CMOS oder CCD Kamera, eine Infrarotkamera und/oder eine Time-of-Flight Kamera handeln. Die erzeugten Bilddaten können als zweidimensionales Pixelarray aufgezeichnet werden. Jedem Pixel können dabei ein oder mehrere Farbwerte (z.B. ein Graustufenwert; Rot-, Grün- und Blauwerte oder Cyan-, Magenta, Gelb und Schwarzwerte) zugeordnet sein und/oder ein Wert der den Abstand des dem Pixel entsprechenden Bildpunktes von der Kamera angibt.

Die Verpackungsmaschine 100 umfasst eine Recheneinheit 110, die eingerichtet ist zum Klassifizieren eines Arbeitsproduktes der Verpackungsmaschine 100 als Gutprodukt oder Schlechtprodukt. Dazu kann die Recheneinheit die von dem optischen Sensor bestimmten Bilddaten der erzeugten Arbeitsprodukte 125 oder 135 empfangen. Zudem umfasst die Verpackungsmaschine 100 eine Steuerungseinheit 150, die eingerichtet ist, den Verarbeitungsprozess der Verpackungsmaschine zu steuern. Steuerungseinheit 150 und Recheneinheit 110 können als separate Einrichtungen der Verpackungsmaschine 100 ausgeführt sein. Alternativ können die Steuerungseinheit 150 und die Recheneinheit 110 als eine gemeinsame Einrichtung der Verpackungsmaschine 100 ausgeführt sein. Die Recheneinheit 110 kann mit der Steuerungseinheit 150 kommunikativ verbunden sein und kann eingerichtet sein, Steuerbefehle an die Steuerungseinheit zu übermitteln. Beispielsweise kann die Recheneinheit 110 Steuerbefehle an die Steuerungseinheit 150 übermitteln, um die Verpackungsmaschine zu Schritten zu veranlassen, die ein als Schlechtprodukt klassifiziertes Arbeitsprodukt verbessern, so dass das verbesserte Arbeitsprodukt die Qualitätskriterien für ein Gutprodukt erfüllt. Alternativ oder zusätzlich kann die Recheneinheit 110 Steuerbefehle an die Steuerungseinheit 150 übermitteln, um die Verpackungsmaschine zu Schritten zu veranlassen, um als Schlechtprodukte klassifizierte Arbeitsprodukte auszusortieren oder als Schlechtprodukte zu kennzeichnen (z.B. an einer Anzeigeeinrichtung der Verpackungsmaschine anzuzeigen, dass ein Arbeitsprodukt als Schlechtprodukt klassifiziert wurde).

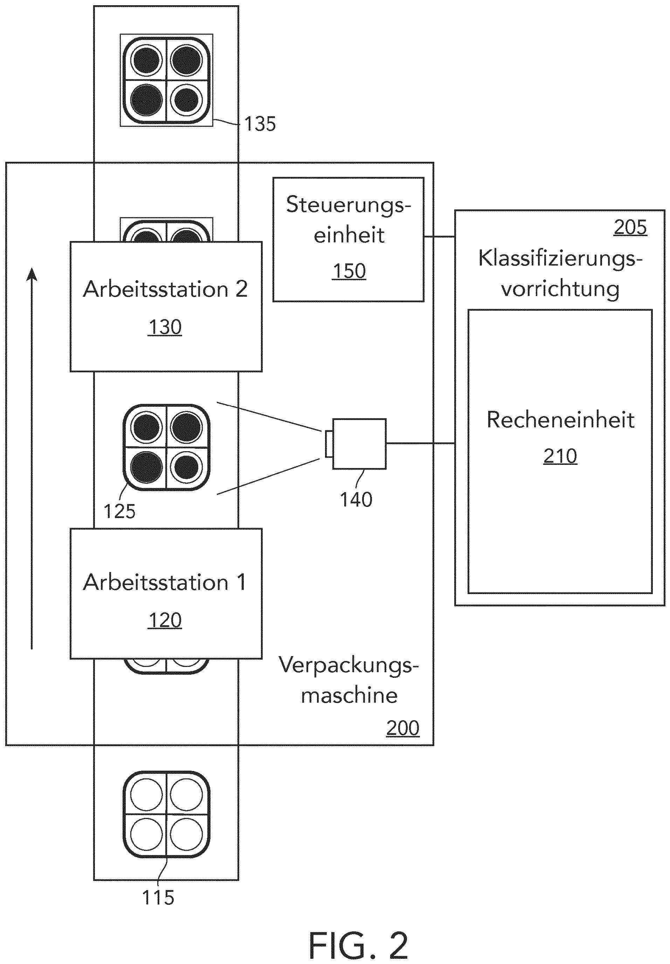

In der Verpackungsmaschine 100 ist die Recheneinheit 110 als interner Bestandteil der Verpackungsmaschine 100 zur Durchführung der Klassifizierung eingerichtet. Alternativ kann die Klassifizierung von einer separaten externen Vorrichtung für die Klassifizierung von Verpackungsprodukten einer Verpackungsmaschine durchgeführt werden. Fig. 2 zeigt eine entsprechende beispielhafte Ausführungsform einer erfindungsgemäßen Vorrichtung 205 zur Klassifizierung von Verpackungsprodukten für eine Verpackungsmaschine 200. Bei der Verpackungsmaschine 200 kann es sich beispielsweise um eine Schalenverschließmaschine, eine Tiefziehverpackungsmaschine, eine Kammermaschine, eine Kammerbandmaschine oder eine Etikettierungsmaschine handeln. Die Verpackungsmaschine 200 umfasst eine erste Arbeitsstationen 120, die Eingangsprodukte 115 in vorläufige Produkte 125 verarbeitet und eine zweite Arbeitsstation 130, die die vorläufigen Produkte 125 in endgültige Produkte 135 verarbeitet, in derselben Art, wie es oben bereits für die Verpackungsmaschine 100 beschrieben wurde. Die Verpackungsmaschine 200 umfasst den im Zusammenhang mit der Verpackungsmaschine 100 beschriebenen optischen Sensor 140. Die Klassifizierungsvorrichtung 205 ist mit der Verpackungsmaschine 200 kommunikativ verbunden, beispielsweise über eine spezielle Datenschnittstelle der Verpackungsmaschine 200 oder über ein Datennetzwerk (z.B. LAN, WAN, WLAN, oder Internet). Die Klassifizierungsvorrichtung 205 umfasst eine Recheneinheit 210, die der Recheneinheit 110 der Verpackungsmaschine 100 entspricht. Die Recheneinheit 210 ist eingerichtet, die von dem optischen Sensor 140 erfassten Bilddaten der Arbeitsprodukte der Verpackungsmaschine 200 von dem optischen Sensor 140 zu empfangen (z.B. über die spezielle Datenschnittstelle der Verpackungsmaschine 200 oder über das Datennetzwerk).

Die Verpackungsmaschine 200 umfasst eine Steuerungseinheit 150, die eingerichtet ist, den Verarbeitungsprozess der Verpackungsmaschine 200 zu steuern. Die Klassifizierungsvorrichtung 205 kann mit der Steuerungseinheit 150 kommunikativ verbunden sein (z.B. über die spezielle Datenschnittstelle der Verpackungsmaschine 200 oder über das Datennetzwerk) und kann eingerichtet sein, Steuerbefehle an die Steuerungseinheit 150 zu übermitteln. Beispielsweise kann die Klassifizierungsvorrichtung 205 Steuerbefehle an die Steuerungseinheit 150 übermitteln, um die Verpackungsmaschine zu Schritten zu veranlassen, die ein als Schlechtprodukt klassifiziertes Arbeitsprodukt verbessern, so dass das verbesserte Arbeitsprodukt die Qualitätskriterien für ein Gutprodukt erfüllt. Alternativ oder zusätzlich kann die Klassifizierungsvorrichtung 205 Steuerbefehle an die Steuerungseinheit 150 übermitteln, um die Verpackungsmaschine zu Schritten zu veranlassen, um als Schlechtprodukte klassifizierte Arbeitsprodukte auszusortieren oder als Schlechtprodukte zu kennzeichnen (z.B. an einer Anzeigeeinrichtung der Verpackungsmaschine anzuzeigen, dass ein Arbeitsprodukt als Schlechtprodukt klassifiziert wurde).

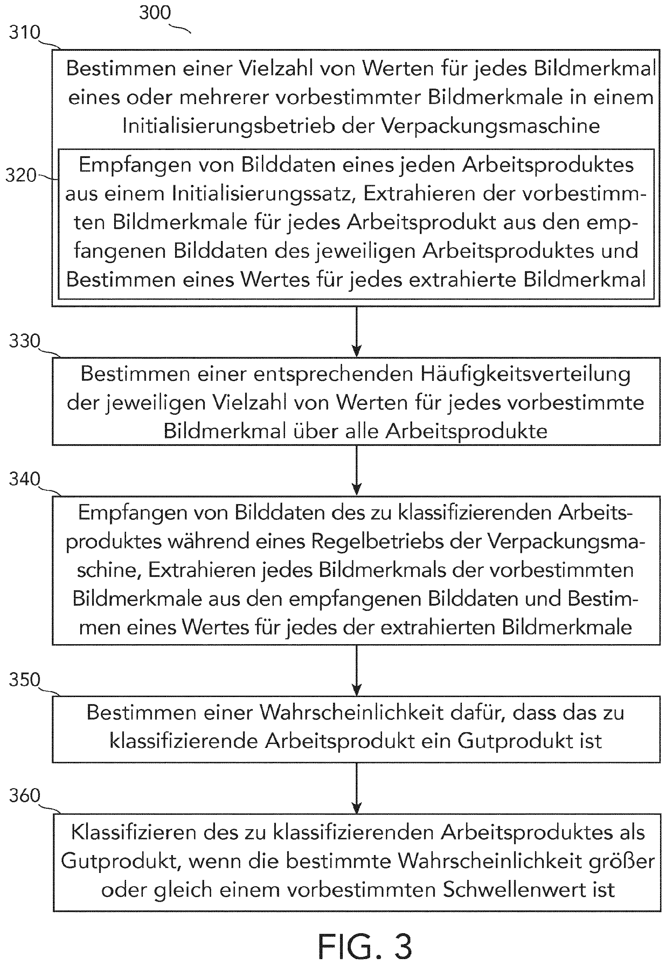

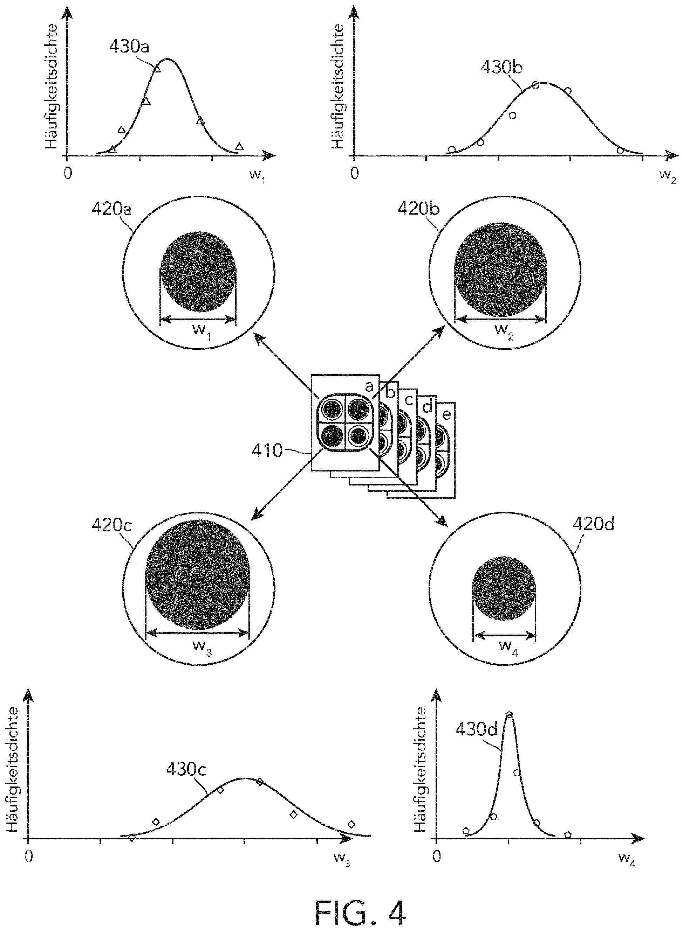

Die Recheneinheit 110 der Verpackungsmaschine 100 und die Recheneinheit 210 der Klassifizierungsvorrichtung 205 sind jeweils dazu eingerichtet ein erfindungsgemäßes Verfahren zur Klassifizierung von Arbeitsprodukten der jeweilige Verpackungsmaschine 100 oder 200 auszuführen. Eine beispielhafte Ausführungsform eines solchen Verfahrens wird im Folgenden mit Bezug auf Fig. 3 und Fig. 4 beschreiben.

Fig. 3 zeigt eine Ausführungsform eines erfindungsgemäßen Verfahrens 300 zur Klassifizierung von Arbeitsprodukten 125, 135 einer Verpackungsmaschine 100, 200. Die Arbeitsprodukte 125, 135 der Verpackungsmaschine 100, 200 werden als Gutprodukte oder Schlechtprodukte klassifiziert, wobei ein Gutprodukt ein Arbeitsprodukt ist, das vorgegebenen Qualitätsanforderungen entspricht. Die Verpackungsmaschine 100, 200 weist einen optischen Sensor 140 auf, der eingerichtet ist, Bilddaten von den Arbeitsprodukten der Verpackungsmaschine zu erzeugen. Das Verfahren 300 beginnt mit Schritt 310 in dem eine Vielzahl von Werten für jedes Bildmerkmal eines oder mehrerer vorbestimmter Bildmerkmale in einem Initialisierungsbetrieb der Verpackungsmaschine bestimmt werden. Das bestimmen der Vielzahl von Werten umfasst in Schritt 320 das Empfangen von Bilddaten eines jeden Arbeitsproduktes 125, 135 aus einem Initialisierungssatz von Arbeitsprodukten von dem optischen Sensor 140. Für jedes Arbeitsprodukt des Initialisierungssatzes werden die vorbestimmten Bildmerkmale aus den empfangenen Bilddaten des jeweiligen Arbeitsproduktes extrahiert. Für jedes extrahierte Bildmerkmal eines jeden Arbeitsproduktes wird ein Wert aus den Bilddaten des Arbeitsprodukts bestimmt.

Jedes der vorbestimmten Bildmerkmale kann aus den empfangenen Bilddaten des jeweiligen Arbeitsproduktes durch Anwendung eines entsprechenden Extrahierungsalgorithmus auf die Bilddaten des jeweiligen Arbeitsproduktes extrahiert werden. Fig. 4 zeigt mehrere Bilder 410, die von dem Sensor 140 für verschiedene von der Verpackungsmaschine 100, 200 erzeugte Arbeitsprodukte 125, 135 aus dem Initialisierungssatz von Arbeitsprodukten, während des Initialisierungsbetriebes erzeugt wurden. Die Bildmerkmale, die in dem gezeigten Beispiel für die Gutprodukterkennung gewählt wurden sollen es ermöglichen, zu erkennen, ob in jede der vorgesehenen Produktmulden des Behälters jeweils das richtige Produkt gefüllt wurde. Da die Produkte eine runde Form aufweisen, wurden als zu extrahierendes Bildmerkmal eine durch Kontrast oder Farbe von der Umgebung abgegrenzte runde Pixelfläche an der Position der jeweiligen Produktmulde gewählt. Die Bilddaten 410 für jedes der Arbeitsprodukte bestehen aus einem 2-dimensionalen Feld aus Pixelwerten auf das ein entsprechenden Extrahierungsalgorithmus angewendet wird, um in den jeweiligen Bilddaten 410 das jeweilige gesuchte Bildmerkmal zu identifizieren bzw. zu extrahieren. Fig. 4 zeigt beispielhaft die extrahierten Bildmerkmale 420a, 420b, 420c und 420d, die jeweils eine der kreisförmigen Flächen darstellen, die die Produkte in dem Behälter auf dem Bild 410a abbilden. Dabei werden vorgegebene oder gelernter Rechenvorschriften auf die Pixelwerte der Bilddaten angewendet. Die Rechenvorschriften können z.B. den Pixelwert in Abhängigkeit seines eigenen Pixelwertes und/oder in Abhängigkeit von Pixelwerten benachbarter Pixel verändern (z.B. durch Anwendung kernelbasierter Filter). Der Extrahierungsalgorithmus für ein Bildmerkmal kann ein klassischer, programmatischer Extrahierungsalgorithmus (z.B. eine vorbestimmte Folge von nacheinander ausgeführten Bildverarbeitungsbefehlen) sein. Alternativ kann der Extrahierungsalgorithmus ein Machine-Learning-Modell (z.B. ein Neuronales Netz) umfassen, das auf die Extrahierung des entsprechend Bildmerkmales trainiert wurde. Beispielsweise kann der Extrahierungsalgorithmus ein auf die Extrahierung eines Bildmerkmals trainierter Deep-Learning-Algorithmus (z.B. ein Convolutional Neural Network) sein.

Den für ein Bild extrahierten Bildmerkmalen wird jeweils ein Zahlenwert zugeordnet, der sich aus den extrahierten Bildmerkmalen bestimmen lässt, bzw. aus den Bildpixeln, die dem jeweiligen Bildmerkmal entsprechen. Im Beispiel der Fig. 4 wird ein Durchmesser der annähernd kreisförmigen Flächen als Zahlenwert der jeweiligen Bildmerkmale bestimmt. Diese Wahl des Zahlenwertes für die Bildmerkmale erlaubt die Unterscheidung der verschiedenen Produkte und die Feststellung, ob die jeweilige Mulde des Behälters mit dem richtigen Produkt befüllt wurde, da sich die Produkte durch ihren Durchmesser unterscheiden. Die Wahl der Bildmerkmale und der den Bildmerkmalen zugeordneten Zahlenwerte muss auf die konkret zu klassifizierenden Arbeitsprodukte abgestimmt sein. Die Extrahierung der Bildmerkmale und die Bestimmung der Zahlenwerte für das jeweilige aus dem Bild extrahierte Bildmerkmal wird für jedes von der Recheneinheit 110, 210 empfangene Bild eines Arbeitsproduktes des Initialisierungssatzes wiederholt.

Nachdem alle Arbeitsprodukte des Initialisierungssatzes abgearbeitet wurden, liegen für jedes vorbestimmte Bildmerkmal jeweils eine Vielzahl von Werten vor, die aus den Bilddaten für jedes der Arbeitsprodukte des Initialisierungssatzes erzeugt wurden. Das Verfahren 300 fährt in Schritt 330 mit dem Bestimmen einer entsprechenden Häufigkeitsverteilung der jeweiligen Vielzahl von Werten für jedes vorbestimmte Bildmerkmal über alle Arbeitsprodukte des Initialisierungssatzes fort. Der Initialisierungssatz umfasst eine Vielzahl von Gutprodukten. Der Initialisierungssatz kann auch einzelne Schlechtprodukte umfassen, solange die statistische Auswertung der Merkmalswerte für die verschiedenen vorbestimmten Bildmerkmale über die Arbeitsprodukte des Initialisierungssatzes nur in vernachlässigbarer Weise beeinflussen. Typischerweise besteht der Initialisierungssatz in der überwiegenden Mehrheit aus Gutprodukten (z.B. zu mehr als 90%, mehr als 95%, oder mehr als 99%).

In Fig. 4 werden die bestimmten Häufigkeitsverteilungen für die verschiedenen Bildmerkmale beispielhaft gezeigt. Die Häufigkeitsdichtefunktion 430 stellt die Häufigkeitsdichteverteilung für die Werte w₁ des Bildmerkmals 420a dar. Die in den Graphen eingezeichneten Punkte stellen beispielhafte Häufigkeitsdichtewerte dar, die aus den verschiedenen Werten für w₁ ermittelt werden, die aus den Bilddaten zu den Arbeitsprodukten des Initialisierungssatzes bestimmten wurden. Aus den ermittelten Häufigkeitsdichtewerten können ein Mittelwert (d.h. der Erwartungswert), ein Wert für die Standardabweichung, ein größter Werte, ein kleinster Wert, eine Schiefe und/oder eines Exzess-Wert bestimmt werden. Mit diesen Werten oder durch fitten an die Daten (z.B. mit der Methode der kleinsten Quadrate) kann eine Häufigkeitsdichtefunktion bestimmte werden, die die Daten näherungsweise beschreibt. Die durchgezogene Linie des Graphen stellt eine an die Daten gefittete Normalverteilung dar. Je nach Bildmerkmal sind auch andere Verteilungen möglich, etwa eine Poisson- oder Binomialverteilung. In derselben Weise ergibt sich die Häufigkeitsverteilung 430b aus den Werten w₂ für das Bildmerkmal 420b, die Häufigkeitsverteilung 430c aus den Werten w₃ für das Bildmerkmal 420c und die Häufigkeitsverteilung 430d aus den Werten w₄ für das Bildmerkmal 420d. Aus der Häufigkeitsdichteverteilung lässt sich durch Normierung mit der Gesamtzahl der bestimmten Werte für ein Bildmerkmal eine Wahrscheinlichkeitsdichteverteilung bestimmen.

Nachdem die Initialisierungsphase abgeschlossen ist, wird die Verpackungsmaschine im Regelbetrieb verwendet. Im Schritt 340 werden Bilddaten eines zu klassifizierenden Arbeitsproduktes von dem optischen Sensor während des Regelbetriebs der Verpackungsmaschine empfangen. Jedes der der vorbestimmten Bildmerkmale wird aus den empfangenen Bilddaten des zu klassifizierenden Arbeitsprodukts extrahiert und für jedes der extrahierten Bildmerkmale wird ein Werte aus den Bilddaten bestimmt. Schritt 340 ist analog zu Schritt 320 in der Initialisierungsphase.

Im Schritt 350 wird eine Wahrscheinlichkeit dafür bestimmt, dass das zu klassifizierende Arbeitsprodukt ein Gutprodukt ist, basierend auf den Werten für das zu klassifizierende Arbeitsprodukt und den Häufigkeitsverteilungen. Beispielsweise kann die Wahrscheinlichkeit, dass das zu klassifizierende Arbeitsprodukt ein Gutprodukt ist durch Anwendung eines Bayes-Klassifikators (z.B. eines Naiven Bayes-Klassifikators) auf den Merkmalsvektor bestimmt werden, der aus den Werten für die Bildmerkmale für das zu klassifizierende Produkt besteht. Der Bayes-Klassifikator kann aus den Häufigkeitsverteilungen der Merkmalswerte für die Bildmerkmale bzw. den daraus ableitbaren Wahrscheinlichkeitsdichten bestimmt werden.

Alternativ oder zusätzlich kann für die Werte jedes Bildmerkmals ein Toleranzintervall um den Erwartungswert der entsprechenden Häufigkeitsverteilung bestimmt werden. Das Toleranzintervall für die Werte eines Bildmerkmals kann aus der bestimmte Häufigkeitsverteilung bzw. der daraus ableitbaren Wahrscheinlichkeitsdichte für die Werte des Bildmerkmals und einem vorbestimmten Schwellenwert für die Wahrscheinlichkeit, dass ein Wert innerhalb des Toleranzintervalls für ein Gutprodukt auftritt, bestimmt werden. Die Wahrscheinlichkeit dafür, dass das zu klassifizierende Arbeitsprodukt ein Gutprodukt ist, kann dann unter Verwendung der Toleranzintervalle für die Werte der Bildmerkmale bestimmt werden.

Schließlich wird in Schritt 360 das zu klassifizierenden Arbeitsproduktes als Gutprodukt klassifiziert, wenn die bestimmte Wahrscheinlichkeit dafür, dass das zu klassifizierende Arbeitsprodukt ein Gutprodukt ist, größer oder gleich einem vorbestimmten Schwellenwert ist. Das zu klassifizierende Arbeitsprodukt kann als Schlechtprodukt klassifiziert werden, wenn die bestimmte Wahrscheinlichkeit dafür, dass das zu klassifizierende Arbeitsprodukt ein Gutprodukt ist, kleiner einem vorbestimmten Schwellenwert ist. Der Schwellenwert für die Klassifizierung als Gutprodukt kann der gleiche sein, der auch bei der Klassifizierung als Schlechtprodukt verwendet wird. Alternativ kann der Schwellenwert für die Klassifizierung als Gutprodukt größer sein als der Schwellenwert für die Klassifizierung als Schlechtprodukt.

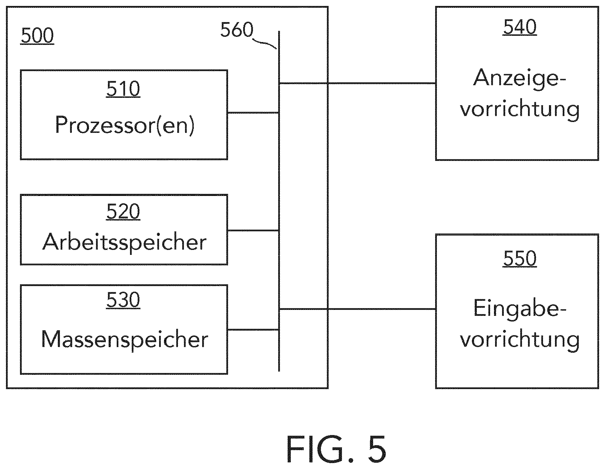

Die Recheneinheiten 110, 120 und die Steuerungseinheit 150 können jeweils durch eine prozessorgesteuerte Datenverarbeitungsvorrichtung implementiert werden. Fig. 5 zeigt eine beispielhafte Ausführungsform einer solchen Datenverarbeitungsvorrichtung 500, die einen oder mehrere Prozessoren 510 (z.B. X86 CPU, ARM CPU, GPU, APU), einen Arbeitsspeicher 520 (z.B. SRAM, DRAM) und einen Massenspeicher 530 (z.B. Festplatte, SSD) umfasst. Der Arbeitsspeicher, der Massenspeicher und der Prozessor sind untereinander über ein Bussystem 560 verbunden und können über das Bussystem 560 Daten austauschen. Der Arbeitsspeicher 520 und/oder der Massenspeicher 530 können ausführbare Befehle umfassen, die, bei Ausführung durch den oder die Prozessoren 510, die Datenverarbeitungsvorrichtung 500 dazu veranlassen eines der hier offenbarten erfindungsgemäßen Verfahren (z.B. Verfahren 300) auszuführen. Die Datenverarbeitungsvorrichtung kann eine externe oder interne Eingabevorrichtung 550 (z.B. Tastatur, Maus, Touchscreen) und/oder eine externe oder interne Anzeigevorrichtung 540 (z.B. LCD-Display, LED-Display, Screenreader, Lautsprecher) aufweisen.

## Patentansprüche

1. Verpackungsmaschine (100), die Folgendes umfasst:
einen optischen Sensor (140), der eingerichtet ist, Bilddaten (410) von Arbeitsprodukten (125, 135) der Verpackungsmaschine (100) zu erzeugen,
**gekennzeichnet durch** eine Recheneinheit (110), die eingerichtet ist zum Klassifizieren eines Arbeitsproduktes (125, 135) der Verpackungsmaschine (100) als Gutprodukt oder Schlechtprodukt, wobei ein Gutprodukt ein Arbeitsprodukt ist, das vorgegebenen Qualitätsanforderungen entspricht, wobei das Klassifizieren des Arbeitsproduktes Folgendes umfasst:
Bestimmen (310) einer Vielzahl von Werten für jedes Bildmerkmal (420) eines oder mehrerer vorbestimmter Bildmerkmale in einem Initialisierungsbetrieb der Verpackungsmaschine (100), umfassend:
Empfangen (320) von Bilddaten (410) eines jeden Arbeitsproduktes (125, 135) aus einem Initialisierungssatz von Arbeitsprodukten von dem optischen Sensor (140), Extrahieren der vorbestimmten Bildmerkmale (420) für jedes Arbeitsprodukt (125, 135) des Initialisierungssatzes aus den empfangenen Bilddaten (410) des jeweiligen Arbeitsproduktes (125, 135) und Bestimmen eines Wertes für jedes extrahierte Bildmerkmal (420) für jedes Arbeitsprodukt (125, 135);
Bestimmen (330) einer entsprechenden Häufigkeitsverteilung (430) der jeweiligen Vielzahl von Werten für jedes vorbestimmte Bildmerkmal (420) über alle Arbeitsprodukte des Initialisierungssatzes, wobei der Initialisierungssatz eine Vielzahl von Gutprodukten umfasst;
Empfangen (340) von Bilddaten (410) des zu klassifizierenden Arbeitsproduktes (125, 135) von dem optischen Sensor (140) während eines Regelbetriebs der Verpackungsmaschine (100), Extrahieren jedes Bildmerkmals (420) der vorbestimmten Bildmerkmale aus den empfangenen Bilddaten (410) des zu klassifizierenden Arbeitsprodukts (125, 135) und Bestimmen eines Wertes für jedes der extrahierten Bildmerkmale (420);
Bestimmen (350) einer Wahrscheinlichkeit dafür, dass das zu klassifizierende Arbeitsprodukt (125, 135) ein Gutprodukt ist basierend auf den Werten für das zu klassifizierende Arbeitsprodukt (125, 135) und den Häufigkeitsverteilungen (430);
Klassifizieren (360) des zu klassifizierenden Arbeitsproduktes (125, 135) als Gutprodukt, wenn die bestimmte Wahrscheinlichkeit größer oder gleich einem vorbestimmten Schwellenwert ist.

2. Verpackungsmaschine (100) nach Anspruch 1, wobei das Klassifizieren des Arbeitsproduktes (125, 135) ferner ein Klassifizieren des zu klassifizierenden Arbeitsproduktes als Schlechtprodukt umfasst, wenn die bestimmte Wahrscheinlichkeit, dass das zu klassifizierende Arbeitsprodukt ein Gutprodukt ist kleiner als der vorbestimmte Schwellenwert ist, und wobei die Verpackungsmaschine (100) ferner eine Steuerungseinheit (150) umfasst, die eingerichtet ist, um die Verpackungsmaschine (100) zu Korrekturschritten zur Verbesserung des klassifizierten Arbeitsproduktes (125, 135) zu veranlassen, wenn das klassifizierte Arbeitsprodukt (125, 135) ein als Schlechtprodukt klassifiziertes vorläufiges Arbeitsprodukt (125) ist, und/oder um die Verpackungsmaschine (100) zum Aussortieren des klassifizierten Arbeitsproduktes (125, 135) oder zum Kennzeichen des klassifizierten Arbeitsproduktes (125, 135) als Schlechtprodukt zu veranlassen, wenn das klassifizierte Arbeitsprodukt ein als Schlechtprodukt klassifiziertes endgültiges Arbeitsprodukt (135) ist.

3. Verfahren (300) zur Klassifizierung von Arbeitsprodukten (125, 135) einer Verpackungsmaschine (100, 200) als Gutprodukte oder Schlechtprodukte, wobei ein Gutprodukt ein Arbeitsprodukt ist, das vorgegebenen Qualitätsanforderungen entspricht, wobei die Verpackungsmaschine (100, 200) einen optischen Sensor (140) aufweist, der eingerichtet ist, Bilddaten (410) von den Arbeitsprodukten (125, 135) der Verpackungsmaschine (100, 200) zu erzeugen, wobei das Verfahren (300) **gekennzeichnet ist durch:**
Bestimmen (310) einer Vielzahl von Werten für jedes Bildmerkmal (410) eines oder mehrerer vorbestimmter Bildmerkmale (420) in einem Initialisierungsbetrieb der Verpackungsmaschine (100, 200), umfassend:
Empfangen (320) von Bilddaten (410) eines jeden Arbeitsproduktes (125, 135) aus einem Initialisierungssatz von Arbeitsprodukten von dem optischen Sensor (140), Extrahieren der vorbestimmten Bildmerkmale (420) für jedes Arbeitsprodukt des Initialisierungssatzes aus den empfangenen Bilddaten (410) des jeweiligen Arbeitsproduktes (125, 135) und Bestimmen eines Wertes für jedes extrahierte Bildmerkmal (420) für jedes Arbeitsprodukt (125, 135);
Bestimmen (330) einer entsprechenden Häufigkeitsverteilung (430) der jeweiligen Vielzahl von Werten für jedes vorbestimmte Bildmerkmal (420) über alle Arbeitsprodukte (125, 135) des Initialisierungssatzes, wobei der Initialisierungssatz eine Vielzahl von Gutprodukten umfasst;
Empfangen (340) von Bilddaten (420) eines zu klassifizierenden Arbeitsproduktes (125, 135) von dem optischen Sensor (140) während eines Regelbetriebs der Verpackungsmaschine (100, 200), Extrahieren jedes Bildmerkmals (420) der vorbestimmten Bildmerkmale aus den empfangenen Bilddaten (410) des zu klassifizierenden Arbeitsprodukts (125, 135) und Bestimmen eines Wertes für jedes der extrahierten Bildmerkmale (420);
Bestimmen (350) einer Wahrscheinlichkeit dafür, dass das zu klassifizierende Arbeitsprodukt (125, 135) ein Gutprodukt ist basierend auf den Werten für das zu klassifizierende Arbeitsprodukt (125, 135) und den Häufigkeitsverteilungen (430);
Klassifizieren (360) des zu klassifizierenden Arbeitsproduktes (125, 135) als Gutprodukt, wenn die bestimmte Wahrscheinlichkeit größer oder gleich einem vorbestimmten Schwellenwert ist.

4. Verfahren nach Anspruch 3, wobei jedes der vorbestimmten Bildmerkmale (420) aus den empfangenen Bilddaten (410) des jeweiligen Arbeitsproduktes (125, 135) durch Anwendung eines entsprechenden Extrahierungsalgorithmus auf die Bilddaten (410) des jeweiligen Arbeitsproduktes (125, 135) extrahiert wird, wobei die Bilddaten (410) des jeweiligen Arbeitsproduktes (125, 135) eine Vielzahl von Pixelwerten umfassen und wobei das Anwenden des entsprechenden Extrahierungsalgorithmus auf die Bilddaten (410) des jeweiligen Arbeitsproduktes (125, 135) das Anwenden einer oder mehrerer vorgegebener oder gelernter Rechenvorschriften auf die Pixelwerte der Bilddaten (410) umfasst.

5. Verfahren nach einem der Ansprüche 3 oder 4, wobei das Klassifizieren des Arbeitsproduktes (125, 135) ferner eine Bestimmung einer entsprechenden Wahrscheinlichkeitsverteilung für die jeweilige Vielzahl von Werten für jedes vorbestimmte Bildmerkmal (420) über alle Arbeitsprodukte (125, 135) des Initialisierungssatzes basierend auf der entsprechenden Häufigkeitsverteilung (430) umfasst.

6. Verfahren nach Anspruch 5, wobei das Bestimmen der entsprechenden Wahrscheinlichkeitsverteilung eine Berechnung von Funktionsparametern einer vorgegebenen Wahrscheinlichkeitsfunktion für das jeweilige Bildmerkmal (420) mittels der entsprechenden Häufigkeitsverteilung (430) umfasst.

7. Verfahren nach Anspruch 6, wobei die Berechnung der Funktionsparameter der vorgegebenen Wahrscheinlichkeitsverteilungsfunktion die Bestimmung eines Mittelwertes, einer Standardabweichung, eines größten Wertes, eines kleinsten Wertes, einer Schiefe, und/oder eines Exzess-Wertes aus der entsprechenden Häufigkeitsverteilung (430) umfasst.

8. Verfahren nach einem der Ansprüche 5 bis 7, wobei das Klassifizieren des Arbeitsproduktes (125, 135) ferner eine Bestimmung eines Bayes-Klassifikators mittels der bestimmten Wahrscheinlichkeitsverteilungen umfasst.

9. Verfahren nach einem der Ansprüche 3 bis 8, wobei das Klassifizieren des Arbeitsproduktes (125, 135) ferner eine Bestimmung eines entsprechenden Toleranzintervalls für die Werte jedes der vorbestimmten Bildmerkmale (420) basierend auf der Häufigkeitsverteilung (420) der Vielzahl von Werten für das jeweilige vorbestimmte Bildmerkmal (420) umfasst.

10. Verfahren nach einem der Ansprüche 3 bis 9, wobei das Bestimmen der Wahrscheinlichkeit, dass das zu klassifizierende Arbeitsprodukt (125, 135) ein Gutprodukt ist, das Bestimmen einer bedingten Wahrscheinlichkeit dafür umfasst, dass die für das zu klassifizierenden Arbeitsprodukt (125, 135) bestimmten Werte der vorbestimmten Bildmerkmale (420) für ein Gutprodukt auftreten.

11. Verfahren nach Anspruche 8, wobei das Bestimmen der Wahrscheinlichkeit, dass das zu klassifizierende Arbeitsprodukt (125, 135) ein Gutprodukt ist, das Anwenden des Bayes-Klassifikators auf die für das zu klassifizierende Arbeitsprodukt (125, 135) bestimmten Werte der vorbestimmten Bildmerkmale (420) umfasst.

12. Verfahren nach einem der Ansprüche 3 bis 11, wobei die Verpackungsmaschine (100, 200) eine Steuerungseinheit (150) umfasst und das Klassifizieren des Arbeitsproduktes (125, 135) ferner ein Klassifizieren des zu klassifizierenden Arbeitsproduktes (125, 135) als Schlechtprodukt umfasst, wenn die bestimmte Wahrscheinlichkeit, dass das zu klassifizierende Arbeitsprodukt (125, 135) ein Gutprodukt ist, kleiner als der vorbestimmte Schwellenwert ist, wobei das Verfahren ferner umfasst:
Übermitteln von Steuerbefehlen an die Steuerungseinheit (150) der Verpackungsmaschine (100, 200), um die Verpackungsmaschine (100, 200) dazu zu veranlassen Korrekturschritte zur Verbesserung des klassifizierten Arbeitsproduktes (125, 135) auszuführen, wenn das klassifizierte Arbeitsprodukt (125, 135) ein als Schlechtprodukt klassifiziertes vorläufiges Arbeitsprodukt (125) ist, und/oder
Übermitteln von Steuerbefehlen an die Steuerungseinheit (150), um die Verpackungsmaschine (100, 200) dazu zu veranlassen das klassifizierte Arbeitsprodukt (125, 135) auszusortieren oder als Schlechtprodukt zu kennzeichnen, wenn das klassifizierte Arbeitsprodukt (125, 135) ein als Schlechtprodukt klassifiziertes endgültiges Arbeitsprodukt (135) ist.

13. Verfahren nach einem der Ansprüche 3 bis 12, wobei der Initialisierungssatz ferner einige Schlechtprodukte umfasst, wobei die Anzahl der Gutprodukte die Anzahl der Schlechtprodukte im Initialisierungssatz so weit übertrifft, dass der Einfluss der Schlechtprodukte auf die Häufigkeitsverteilungen (430) vernachlässigbar ist.

14. Vorrichtung (205) zur Klassifizierung von Arbeitsprodukten (125, 135) einer Verpackungsmaschine (200), die einen optischen Sensor (140) aufweist, der eingerichtet ist, Bilddaten (410) von den Arbeitsprodukten (125, 135) der Verpackungsmaschine (200) zu erzeugen, **dadurch gekennzeichnet, dass** die Vorrichtung (205) eine Recheneinheit (210) umfasst, die eingerichtet ist, ein Verfahren nach einem der Ansprüche 3 bis 13 auszuführen.

15. Ein oder mehrere computerlesbare Speichermedien (520, 530), mit ausführbaren Befehlen, die bei Ausführung durch eine Verarbeitungsvorrichtung (500) ein Verfahren zur Klassifizierung von Arbeitsprodukten einer Verpackungsmaschine (100, 200) nach einem der Ansprüche 3 bis 13 auszuführen.

16. Verfahren zum Betrieb einer Verpackungsmaschine (100, 200), die einen optischen Sensor (140) umfasst, der eingerichtet ist, Bilddaten (410) von Arbeitsprodukten (125, 135) der Verpackungsmaschine (100, 200) zu erzeugen, wobei das Verfahren **gekennzeichnet ist durch:**
Betreiben (310) der Verpackungsmaschine (100, 200) in einem Initialisierungsbetrieb zur Bestimmung einer Vielzahl von Werten für jedes Bildmerkmal (420) eines oder mehrerer vorbestimmter Bildmerkmale, umfassend:
Empfangen (320) von Bilddaten (410) eines jeden Arbeitsproduktes (125, 135) aus einem Initialisierungssatz von Arbeitsprodukten von dem optischen Sensor (140), Extrahieren der vorbestimmten Bildmerkmale (420) für jedes Arbeitsprodukt (125, 135) des Initialisierungssatzes aus den empfangenen Bilddaten (410) des jeweiligen Arbeitsproduktes (125, 135) und Bestimmen eines Wertes für jedes extrahierte Bildmerkmal (420) für jedes Arbeitsprodukt (125, 135);
Bestimmen (330) einer entsprechenden Häufigkeitsverteilung (430) der jeweiligen Vielzahl von Werten für jedes vorbestimmte Bildmerkmal (420) über alle Arbeitsprodukte (125, 135) des Initialisierungssatzes, wobei der Initialisierungssatz eine Vielzahl von Gutprodukten umfasst, wobei ein Gutprodukt ein Arbeitsprodukt ist, das vorgegebenen Qualitätsanforderungen entspricht;
Betreiben der Verpackungsmaschine in einem Regelbetrieb, umfassend:
Empfangen (340) von Bilddaten (410) eines zu klassifizierenden Arbeitsproduktes (125, 135) von dem optischen Sensor (140), Extrahieren jedes Bildmerkmals (420) der vorbestimmten Bildmerkmale aus den empfangenen Bilddaten (410) des zu klassifizierenden Arbeitsprodukts (125, 135) und Bestimmen eines Wertes für jedes der extrahierten Bildmerkmale (420);
Bestimmen (350) einer Wahrscheinlichkeit dafür, dass das zu klassifizierende Arbeitsprodukt (125, 135) ein Gutprodukt ist, basierend auf den Werten für das zu klassifizierende Arbeitsprodukt (125, 135) und den Häufigkeitsverteilungen (430);
Klassifizieren (360) des zu klassifizierenden Arbeitsproduktes (125, 135) als Gutprodukt, wenn die bestimmte Wahrscheinlichkeit größer oder gleich einem vorbestimmten Schwellenwert ist.
